# DEMANDE DE BREVET EUROPEEN

(11) **EP 4 531 278 A1**
(43) Date de publication de la demande: **02.04.2025**
(21) Numéro de dépôt: 24202067.5
(22) Date de dépôt: 23.09.2024
(51) Int. Cl.: H02S 50/10

(54) **MÉTHODE DE DÉTECTION DE DÉFAUTS DANS UNE INSTALLATION PHOTOVOLTAÏQUE**

(30) Priorité: 27.09.2023 FR 2310256
(71) Demandeur: Quantom, 75009 Paris (FR); Centre National de la Recherche Scientifique, 75016 Paris (FR)
(72) Inventeur: PAVLOV, Marko, 94270 Le Krêmlin-Bicêtre (FR); SEPÚLVEDA OVIEDO, Edgar Hernando, 31400 TOULOUSE (FR); ALONSO, Corinne, 31520 Ramonville St Agnes (FR); TRAVÉ-MASSUYÈS, Louise, 31460 Caraman (FR); SUBIAS, Audine, 31750 Escalquens (FR)
(74) Mandataire: Cabinet Nony

(57) **Abrégé**

L'invention concerne une méthode de détection de défauts dans une installation photovoltaïque comportant plusieurs chaînes de panneaux photovoltaïques, la méthode comportant les étapes suivantes :
- collecte :
- d'informations structurelles relatives à l'installation photovoltaïque,
- de données météorologiques ; et
- de données de fonctionnement pour chaque chaîne de panneaux photovoltaïques ;

- à partir des informations structurelles et des données météorologiques, détermination d'un modèle prédictif de production ajusté de l'installation photovoltaïque ;
- identification de la présence de défauts sur chacune des chaînes de l'installation photovoltaïque en soumettant le modèle prédictif de production ajusté, les données météorologiques et les données de fonctionnement à au moins un algorithme d'apprentissage automatique pré-entraîné de sorte à identifier chaque chaîne de panneaux comprenant des défauts.

## Description

### Domaine technique

La présente invention concerne une méthode de détection de défauts dans des installations photovoltaïques, et des dispositifs pour la mise en oeuvre d'une telle méthode de détection.

### Technique antérieure

La détection et le diagnostic de défauts sont essentiels pour garantir le fonctionnement normal d'une installation photovoltaïque pendant toute sa durée de vie, classiquement de l'ordre de 25 ans, tout en minimisant les pertes de production importantes.

En outre, ces approches sont essentielles pour éviter les conséquences destructrices et les dangers potentiels pour le personnel entrant en contact avec les installations. En particulier la détection et le diagnostic de défauts sont nécessaires afin d'éviter les risques humains et/ou les pertes d'énergie pouvant être à l'origine d'incendies.

Pour ces différentes raisons, de sécurité et de productivité, des méthodes de détection et de diagnostic ont été développées et visent à déterminer, avec la plus grande certitude possible, que des défauts se sont produits sur une installation photovoltaïque et que ladite installation ne fonctionne donc plus dans sa plage de fonctionnement optimal. Les méthodes conventionnelles classiquement mises en oeuvre se fondent sur des connaissances *a priori,* des estimations et des mesures de terrain, et exploitent des méthodes visuelles, des méthodes de traitement d'images, des méthodes fondées sur des détections au niveau du fonctionnement électrique de l'installation, des techniques fondées sur la mise en oeuvre de dispositifs de protection, ou des techniques de détection de défauts de revêtement antireflet. Il existe également plusieurs approches d'apprentissage automatique permettant de détecter certains défauts dans des installations photovoltaïques. Cependant, les approches d'apprentissage automatiques existantes se révèlent insuffisantes, ne permettant pas de détecter ou différencier certains défauts, comme les traces d'escargot. En particulier, ces approches sont sensibles et dépendantes de l'installation photovoltaïque concernée et des conditions d'ensoleillement dans lesquelles le diagnostic de l'installation est effectué. Par exemple, ces approches ne distinguent pas nécessairement une baisse de production due à une modification des conditions d'ensoleillement et une baisse de production due à un défaut de l'installation.

Cependant, ces méthodes conventionnelles de détection et de diagnostic des défauts sont limitées. En particulier, ces méthodes conventionnelles atteignent leurs propres limites lorsque des conditions de défaut se produisent dans plusieurs éléments de l'installation (onduleurs, chaîne, batteries, connecteurs, etc.), ou lorsque des défauts multiples avec différents niveaux d'impact sont présents, ou encore lorsque des défauts avec des expressions dans différents domaines (fréquence ou temps) ou avec des signatures qui ne proviennent pas d'un seul type de données telles que des signatures électriques et/ou thermiques.

Les méthodes conventionnelles détectent également difficilement l'apparition de plusieurs défauts simultanés ou de défauts primaires générant des défauts secondaires plus graves. Notamment, il existe des défauts ou combinaisons de défauts qui produisent une réponse électrique presque identique à la réponse électrique d'une installation non défectueuse et que ces méthodes conventionnelles ne permettent pas d'identifier.

En effet, les méthodes classiquement mises en oeuvre analysent une réponse globale de l'installation photovoltaïque et ne permettent pas de distinguer les différentes signatures. Elles nécessitent de vérifier chaque panneau par analyse visuelle ou analyse d'image, ce qui est long et coûteux.

Parmi les défauts difficiles à détecter, on peut citer la corrosion, les traces d'escargot (« Snail Trail » en anglais), les microfissures, le délaminage, le jaunissement, les défaillances sur les diodes de dérivation, les défaillances du fond de panneau, et les points chauds. Cette liste n'est pas exhaustive.

Enfin, certaines de ces méthodes conventionnelles sont longues à mettre en oeuvre et/ou nécessitent un arrêt de tout ou partie de l'installation photovoltaïque durant la période de diagnostic, impliquant ainsi des pertes de production régulières non négligeables.

### Exposé de l'invention

Il existe donc un besoin pour une méthode améliorée permettant la détection de défauts dans une installation photovoltaïque.

En particulier, il existe un besoin pour une méthode permettant la détection de tout type de défauts, et notamment de défauts non détectables par les méthodes conventionnelles, comme le « Snail Trail ».

Il existe également un besoin pour une méthode permettant la détection de défauts pour n'importe quel type d'installation photovoltaïque, quel que soit l'âge de l'installation ou la technologie exploitée dans l'installation.

De façon générale, il existe un besoin pour une méthode de détection de défauts améliorée qui puisse facilement être mise en oeuvre pour n'importe quelle installation photovoltaïque et qui n'implique pas une perte de production.

L'invention vise à répondre à tout ou partie de ces besoins.

### Résumé de l'invention

Selon un premier aspect de l'invention, l'invention porte sur une méthode de détection de défauts dans une installation photovoltaïque comportant plusieurs chaînes de panneaux photovoltaïques, la méthode comportant les étapes suivantes :
- collecte :
   - d'informations structurelles relatives à la structure de l'installation photovoltaïque ;
   - de données météorologiques ;
   - de données de fonctionnement, par exemple de tension et de courant, pour chaque chaîne de panneaux photovoltaïques de l'installation photovoltaïque ;
- à partir des informations structurelles et des données météorologiques, détermination d'un modèle prédictif de production ajusté de l'installation photovoltaïque, modélisant une production électrique théorique optimale de l'installation photovoltaïque au regard des données météorologiques, le modèle prédictif de production ajusté étant déterminé en supposant que l'installation photovoltaïque ne présente pas de défaut ;
- identification de la présence de défauts sur chacune des chaînes de l'installation photovoltaïque en soumettant le modèle prédictif de production ajusté, les données météorologiques et les données de fonctionnement à au moins un algorithme d'apprentissage automatique pré-entraîné de sorte à identifier chaque chaîne de panneaux comprenant des défauts, appelée « chaîne défectueuse », et de préférence les types de défauts.

Dans un mode de réalisation particulier, le modèle prédictif de production ajusté est déterminé par :
- une génération préalable d'un modèle prédictif de référence déterminé en fonction des informations structurelles de l'installation photovoltaïque puis
- un ajustement du modèle prédictif de référence en fonction des données météorologiques, le modèle prédictif de référence modélisant un profil de production électrique théorique pour l'installation photovoltaïque en considérant l'absence de défauts sur toutes les chaînes de panneaux photovoltaïques et indépendamment des données météorologiques.

Optionnellement, la méthode comporte, après l'étape d'identification de la présence de défauts, une étape de présentation d'un rapport indiquant la ou les chaînes défectueuses, de préférence les types de défauts, et de préférence une ou plusieurs actions de maintenance, les actions de maintenance étant déterminées à partir de l'identification de la présence de défauts sur la ou les chaînes défectueuses, et éventuellement du modèle prédictif de production ajusté et des données de fonctionnement relatives à chaque chaîne défectueuse, de préférence au moyen d'une analyse statistique, de préférence au moyen d'une méthode basée sur des résidus.

L'un des principaux avantages de l'invention est qu'elle permet une détection universelle. Autrement dit, la méthode permet une détection de défauts sur tout type d'installation photovoltaïque indépendamment de la topologie de l'installation photovoltaïque, de sa technologie, de son âge, ou même des conditions météorologiques auxquelles l'installation est soumise. Pour cela, l'invention se fonde sur l'analyse conjointe, de préférence au moyen d'un algorithme d'apprentissage automatique supervisé et d'un algorithme d'apprentissage automatique non supervisé, d'informations structurelles relatives à la structure de l'installation, de données de fonctionnement de l'installation et de données météorologiques.

L'utilisation combinée d'un algorithme d'apprentissage automatique non supervisé et d'un algorithme d'apprentissage automatique supervisé, notamment en cascade, accélère l'identification des défauts nuisant gravement à la production de l'installation photovoltaïque en limitant les besoins en ressources de calcul, notamment grâce à l'algorithme d'apprentissage automatique non supervisé, tout en permettant la détection fine de défauts et un diagnostic préventif de défauts, notamment grâce à l'algorithme d'apprentissage supervisé.

En particulier, l'invention permet non seulement de détecter qu'une installation photovoltaïque comporte un ou plusieurs défauts mais également de localiser la ou les chaînes de panneaux photovoltaïques comportant ces défauts et d'identifier de quel type de défauts il s'agit.

De préférence, les données météorologiques peuvent comporter au moins une irradiation et une température ambiante. Dans un mode de réalisation, les données météorologiques comportent au moins une irradiation, une température ambiante et une vitesse du vent. Cette liste n'est pas limitative.

Les informations structurelles peuvent comprendre : une marque et/ou un âge de l'installation photovoltaïque et/ou un matériau des panneaux photovoltaïques et/ou une technologie des panneaux photovoltaïques et/ou une inclinaison des panneaux photovoltaïques et/ou une topologie de l'installation photovoltaïque et/ou des informations relatives à un remplacement de panneaux photovoltaïques et/ou un nombre de panneaux par chaîne de panneaux et/ou un nombre de chaînes dans l'installation photovoltaïque. Cette liste n'est pas limitative.

De préférence, les données météorologiques et/ou les données de fonctionnement, de préférence les données météorologiques et les données de fonctionnement sont acquises à une fréquence supérieure ou égale à 1 Hz, de préférence supérieure ou égale à 10 Hz, de préférence supérieure ou égale à 100 Hz, de préférence supérieure ou égale à 500 Hz, de préférence encore supérieure ou égale à 1 kHz.

La collecte des données de fonctionnement est de préférence effectuée au moyen d'au moins un capteur analogique.

La collecte des informations structurelles peut être effectuée au moyen d'une interface graphique et/ou au moyen d'une base de données. La collection des informations structurelles est par exemple effectuée par un opérateur. Tout ou partie des informations structurelles peut être extrait d'une base de données.

L'invention permet notamment une détection de défauts au niveau des chaînes de panneaux photovoltaïques. Une telle détection au niveau d'une chaîne de panneaux photovoltaïques permet de localiser plus précisément et plus rapidement les défauts.

Dans un mode de réalisation particulier, les données de fonctionnement sont divisées en fenêtres temporelles, l'identification de la présence de défauts étant effectuée pour chacune des fenêtres temporelles, au moins un algorithme d'apprentissage automatique étant pré-entraîné pour chacune desdites fenêtres temporelles.

Le nombre de fenêtres temporelles dans une journée peut être supérieur ou égal à 2 et/ou inférieur ou égal à 50.

Les données de fonctionnement sont par exemple divisées en quatre fenêtres temporelles. Notamment elles peuvent être divisées en une fenêtre correspondant au matin, une fenêtre correspondant au midi, une fenêtre correspondant à l'après-midi, et une fenêtre correspondant à la nuit. Ce découpage est donné à titre d'exemple.

De préférence, les fenêtres temporelles sont telles qu'en fonctionnement normal, et sous des conditions météorologiques constantes, la production de l'installation sur toute la durée de la fenêtre temporelle est sensiblement constante.

De préférence, les fenêtres temporelles permettent d'isoler des cycles de fonctionnement particuliers de l'installation photovoltaïque. Notamment, une installation photovoltaïque ne produit pas de la même façon en fin de journée qu'en pleine journée. L'analyse des défauts par fenêtre temporelle permet ainsi la détection de défauts détectables uniquement lorsque l'installation photovoltaïque produit peu ou au contraire lorsqu'elle fonctionne à capacité maximale.

Les données de fonctionnement et météorologiques peuvent être normalisées.

Les données de fonctionnement et météorologiques peuvent être prétraitées de sorte à en extraire des attributs, l'identification de la présence de défauts étant effectuée en soumettant ces attributs au moins un algorithme d'apprentissage automatique pré-entraîné de sorte à identifier chaque chaîne défectueuse, et de préférence les types de défauts, à partir d'une base de données d'entraînement.

Les attributs peuvent être déterminés en décomposant les données de fonctionnement et météorologiques, par exemple via une décomposition en ondelettes, et/ou peuvent être déterminés au moyen d'un algorithme de sélection d'attributs, par exemple par analyse des corrélations des attributs et/ou par analyse de variance.

Avantageusement l'invention comporte une analyse des défauts détectés, localisés et identifiés, de sorte à prioriser des tâches d'entretien et de réparation à effectuer.

L'invention fournit ainsi une méthode d'aide à la décision permettant une optimisation des réparations et donc une optimisation du fonctionnement de l'installation photovoltaïque.

La priorisation des tâches d'entretien et de réparation à effectuer peut dépendre du ou des types de défaut identifiés, par exemple en fonction de la présence de traces d'escargot, de verre cassé, de délamination, de corrosion, de jaunissement, de microfissures des cellules solaires, de fissures des cellules solaires, de dégradation induite par le potentiel, d'une boite de dérivation défectueuse, de fissures d'une feuille de fond (« backsheet »).

La priorisation des tâches d'entretien et de réparation à effectuer peut notamment dépendre du bénéfice de production ou de sécurité qu'apporteraient les tâches à effectuer, du coût engendré par les tâches à effectuer, du temps nécessaire à la réparation, d'une nécessité ou non de mettre en arrêt l'installation photovoltaïque pour effectuer une tâche, considérés seuls ou en combinaison. En particulier, la priorisation peut dépendre d'un rapport entre un bénéfice de production ou de sécurité et un coût, et/ou d'un rapport entre un bénéfice de production ou de sécurité et un temps nécessaire à la réparation.

De préférence, à chaque mise en oeuvre de la méthode de détection, les données collectées et l'identification des défauts sont stockées de sorte à permettre l'actualisation des algorithmes d'apprentissage automatique. Eventuellement l'identification des défauts est validée par un expert du domaine, par exemple en allant vérifier que le défaut réel correspond bien au défaut identifié.

L'invention porte également, selon un autre de ses aspects, sur un programme d'ordinateur comportant des instructions, qui lorsque le programme est exécuté par un ordinateur, conduisent celui-ci à mettre en oeuvre une méthode de détection de défauts selon l'invention.

Un autre aspect de l'invention porte sur un dispositif de mesure pour la collecte de données météorologiques et de fonctionnement dans une installation photovoltaïque comportant plusieurs chaînes de panneaux photovoltaïques connectées parallèlement les unes aux autres à une boîte de jonction, le dispositif comportant :
- une station météorologique pour l'acquisition de données météorologiques, et
- un module de mesure de données de fonctionnement, notamment de tension et de courant, le module de mesure étant configuré pour acquérir les données à une fréquence supérieure ou égale à 1 Hz, de préférence supérieure ou égale à 10 Hz, de préférence supérieure ou égale à 100 Hz, de préférence supérieure ou égale à 500 Hz, de préférence encore supérieure ou égale à 1 kHz, et pour être connecté en série entre au moins une partie des chaînes de panneaux de l'installation photovoltaïque, de préférence toutes les chaînes de panneaux, et la boîte de jonction,
le module de mesure étant configuré pour acquérir les données de fonctionnement pour chaque chaîne de panneaux connectée au dispositif de mesure.

La station météorologique peut acquérir des données météorologiques dans un rayon d'environ 100 m autour du dispositif de mesure, de préférence dans un rayon d'environ 10 m.

La station météorologique peut être configurée pour acquérir des données météorologiques à une fréquence identique à la fréquence d'acquisition du module de mesure.

Le module de mesure peut avantageusement comporter au moins un capteur analogique. Les capteurs analogiques permettent entre autres l'acquisition de données à une fréquence d'échantillonnage élevée, en particulier supérieure à 1 kHz et inférieure à 1 MHz.

Le module de mesure et la station météorologique peuvent être connectés par des moyens de communication filaires et/ou par des moyens de communication sans fil.

Le module de mesure et/ou la station météorologique peu(ven)t être configuré(e)(s) de sorte à permettre le stockage et/ou le traitement des données. Dans un mode de réalisation particulier, seul le module de mesure ou la station météorologique est configuré(e) pour permettre le stockage et/ou le traitement des données de fonctionnement et météorologiques.

Dans un mode de réalisation, le dispositif est configuré de sorte à être connecté à au moins une chaîne, de préférence au moins 8, de préférence au moins 10, de préférence au moins 15, encore mieux au moins 20, encore mieux au moins 27 et/ou moins de 500, ou moins de 100 chaînes de panneaux photovoltaïques.

Dans un mode de réalisation, le dispositif est configuré de sorte à être connecté à au moins 25% des chaînes de panneaux photovoltaïques d'une installation photovoltaïque, de préférence au moins 50%, encore mieux au moins 75%. De préférence, le dispositif est configuré de sorte à être connecté à toutes les chaînes de panneaux photovoltaïques d'une installation photovoltaïques.

La connexion du dispositif aux chaînes de panneaux peut avantageusement être effectuée au niveau de la boîte de jonction d'une installation photovoltaïque, la boîte de jonction étant utilisée pour permettre le raccordement en parallèle des chaînes de panneaux d'une installation photovoltaïque.

Selon encore un autre aspect de l'invention, l'invention porte sur un dispositif de détection de défauts dans une installation photovoltaïque comportant plusieurs chaînes de panneaux photovoltaïques connectées parallèlement les unes aux autres à une boîte de jonction, le dispositif comportant :
- un dispositif de mesure pour la collecte de données météorologiques et de fonctionnement selon l'invention, et
- un programme d'ordinateur comportant des instructions, qui lorsque le programme est exécuté par un ordinateur, conduisent celui-ci à mettre en oeuvre une méthode de détection de défauts selon l'invention.

Le dispositif de détection de défauts peut notamment comporter des moyens d'acquisition d'informations structurelles de l'installation photovoltaïque, de préférence les moyens d'acquisition comportant une interface graphique.

L'invention porte également sur une installation photovoltaïque comportant plusieurs chaînes de panneaux photovoltaïques en parallèle connectées à une boîte de jonction, dans laquelle un dispositif de détection de défauts selon l'invention est branché en série entre tout ou partie des chaînes de panneaux et la boîte de jonction.

### Définitions

Les informations structurelles définissent les caractéristiques intrinsèques de l'installation photovoltaïque, et en particulier les caractéristiques relatives à la technologie des panneaux photovoltaïques et à leur agencement. Parmi les informations structurelles on peut citer entre autres la technologique des panneaux photovoltaïques, le nombre de panneaux photovoltaïques en série pour chaque chaîne de panneaux photovoltaïques, l'âge de l'installation photovoltaïque, l'âge des panneaux photovoltaïques, des informations relatives à des remplacements effectués dans l'installation photovoltaïque, l'inclinaison et/ou l'orientation des panneaux photovoltaïques, la hauteur moyenne, minimale et/ou maximale de l'installation photovoltaïque ou des panneaux photovoltaïques par rapport au sol.

Une technologie de panneau photovoltaïque dépend du type de cellules utilisées pour former le panneau. En fonction des cellules utilisées, un panneau photovoltaïque ne produit pas de l'énergie de la même façon et n'a pas la même rentabilité.

La technologie d'un panneau photovoltaïque peut être basée sur des panneaux en cellules de silicium monocristallin, polycristallin, c'est-à-dire basée sur des cristaux de silicium mélangés, amorphe, c'est-à-dire basée sur des cellules formées par vaporisation d'une couche de silicium sur une surface amorphe, comme du verre, de l'acier ou du polypropylène, ou hybride, c'est-à-dire basée sur des cellules à hétérojonction ou tandem.

Un modèle prédictif de production ajusté fournit une prédiction de la production d'une chaîne de panneaux ou d'une installation photovoltaïque dans une situation théorique idéale pour des conditions météorologiques données, autrement dit dans une situation pour laquelle la chaîne de panneaux ou respectivement l'installation photovoltaïque ne présente pas de défaut et fonctionne à sa capacité maximale en considérant les conditions météorologiques données. Un modèle prédictif de production ajusté est dit « ajusté » car il est adapté aux conditions météorologiques données.

Un modèle prédictif de référence fournit une prédiction de la production d'une chaîne de panneaux ou d'une installation photovoltaïque dans une situation théorique idéale, indépendamment des conditions météorologiques, autrement dit dans une situation pour laquelle la chaîne de panneaux ou respectivement l'installation photovoltaïque ne présente pas de défaut et fonctionne à sa capacité maximale indépendamment des conditions météorologiques données.

Les modèles prédictifs de référence et ajusté simulent une production électrique théorique optimale pour une chaîne de panneaux ou pour une installation photovoltaïque.

Un modèle prédictif de référence ou un modèle prédictif de production ajusté peut notamment prendre la forme d'une courbe de puissance.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel :
- [Fig 1] la figure 1 représente les étapes d'une méthode de détection de défauts selon l'invention,
- [Fig 2] la figure 2 est un schéma bloc représentant le fonctionnement d'un programme d'ordinateur pour la mise en oeuvre d'une méthode de détection de défauts selon l'invention,
- [Fig 3] la figure 3 représente une installation photovoltaïque comprenant un dispositif de mesure selon l'invention,
- [Fig 4] la figure 4 schématise un dispositif de détection de défaut selon l'invention,
- [Fig 5] la figure 5 illustre l'entraînement d'un algorithme d'apprentissage automatique et l'enrichissement d'une base de données d'entrainement,
- [Fig 6] la figure 6 est un exemple de détection de défaut selon l'invention,
- [Fig 7] la figure 7 illustre l'acquisition de données de fonctionnement d'un panneau,
- [Fig 8] la figure 8 illustre l'acquisition de données météorologiques,
- [Fig 9] la figure 9 illustre des modèles prédictifs ajustés représentatifs de la production de deux panneaux sains déterminées comparés avec les valeurs réelles de production des panneaux sains mesurées au moyen d'un capteur.

Dans la suite de la description, les éléments identiques ou de fonctions identiques portent le même signe de référence. Leur description n'est pas reprise en regard de chacune des figures, seules les principales différences entre les modes de réalisation étant mentionnées.

### Description détaillée

### Méthode de détection

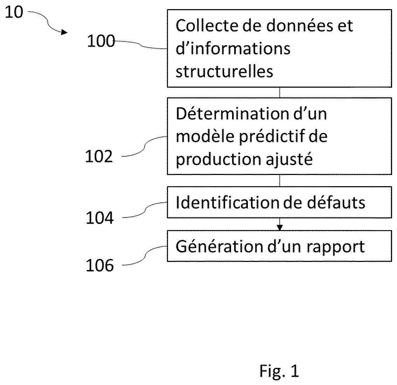

La figure 1 illustre les étapes d'une méthode 10 de détection de défauts dans une installation photovoltaïque selon l'invention.

Une méthode 10 de détection de défauts selon l'invention comporte
- la collecte 100 d'informations structurelles 300 relatives à la structure de l'installation photovoltaïque, de données météorologiques 220 et de données de fonctionnement 200 ;
- la détermination d'un modèle prédictif ajusté 102 ;
- l'identification de la présence de défauts 104, et éventuellement de types de défauts, et
- optionnellement la génération d'un rapport 106.

### Collecte de données et d'informations

La collecte comporte la collecte d'informations structurelles relatives à la structure de l'installation photovoltaïque 300, la collecte de données météorologiques 220, et la collecte de données de fonctionnement de l'installation photovoltaïque 200.

Les informations structurelles 300 peuvent comporter : une marque et/ou un âge de l'installation photovoltaïque et/ou un matériau des panneaux photovoltaïques et/ou une technologie des panneaux photovoltaïques et/ou une inclinaison des panneaux photovoltaïques et/ou une topologie de l'installation photovoltaïque et/ou des informations relatives à un remplacement de panneaux photovoltaïques et/ou un nombre de panneaux par chaînes de panneaux et/ou un nombre de chaînes dans l'installation photovoltaïque.

De préférence, les informations structurelles 300 sont renseignées par un opérateur, par exemple via une interface 30b, et/ou extraites d'une base de données 30a.

En particulier, les informations structurelles peuvent être extraites de rapports de terrain réalisés pour l'installation photovoltaïque et/ou de fiches techniques de l'installation photovoltaïque.

De préférence, les données météorologiques 220 comportent au moins une irradiation et une température ambiante, dans la région de l'installation photovoltaïque. Les données météorologiques peuvent comporter au moins une irradiation, une température ambiante et une vitesse du vent.

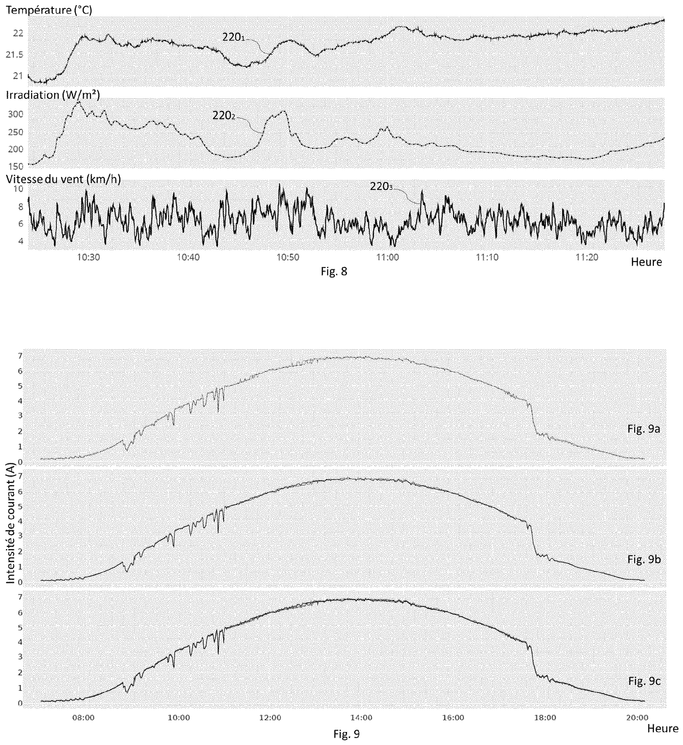

La figure 8 illustre un exemple de données de météorologique 220 composées de l'acquisition de la température 220₁, de l'acquisition de l'irradiation 220₂ et de l'acquisition de la vitesse du vent 220₃, dans un rayon de 100 m autour d'une installation photovoltaïque.

De préférence, les données météorologiques sont acquises au moyen d'une station météorologique 22.

Les données de météorologiques 220 sont de préférence acquises à une fréquence supérieure ou égale à 1 Hz, de préférence supérieure ou égale à 1 kHz.

Les données de fonctionnement 200 comportent de préférence la tension et/ou le courant circulant dans une ou plusieurs chaînes de panneaux de l'installation photovoltaïque pour lesquelles on cherche à détecter la présence de défauts.

De façon générale, les données de fonctionnement 200 sont choisies de sorte à permettre la détermination de la production électrique de l'installation photovoltaïque au cours du temps.

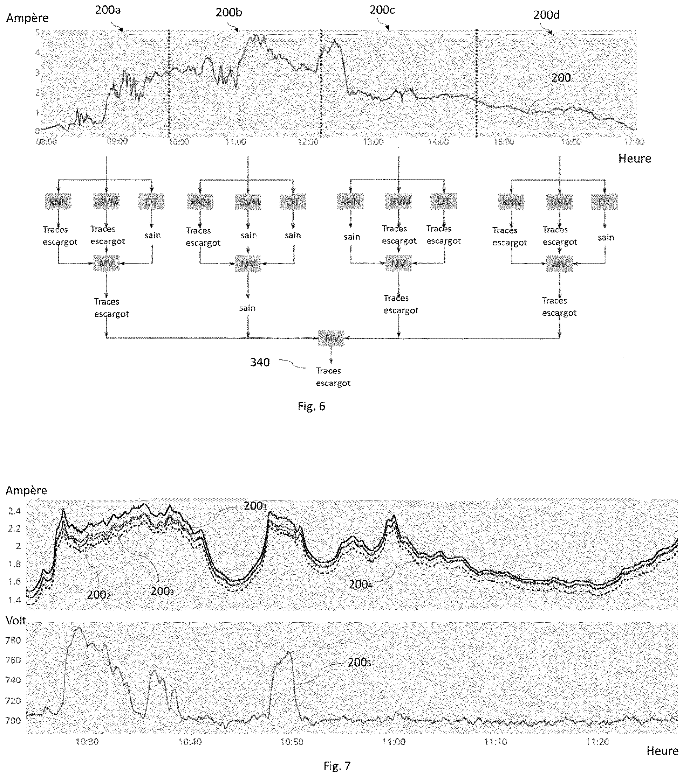

La figure 7 illustre un exemple de données de fonctionnement 200 composées d'acquisition d'intensités de courant 200₁, 200₂, 200₃, 200₄ et d'une tension 200₅ représentatives du fonctionnement d'une chaîne de panneaux photovoltaïques.

Les données de fonctionnement 200 sont de préférence acquises à une fréquence supérieure ou égale à 1 Hz, de préférence supérieure ou égale à 1 kHz.

Dans un mode de réalisation, les données de fonctionnement 200 et les données météorologiques 220 sont acquises à même fréquence.

Les données de fonctionnement 200 sont de préférence acquises au moyen d'au moins un capteur analogique. Le capteur analogique peut être avantageusement configuré pour une acquisition des données de fonctionnement à une fréquence supérieure ou égale à 1 Hz, de préférence supérieure ou égale à 1 kHz, et/ou inférieure ou égale à 1MHz.

La collecte des données de fonctionnement et/ou météorologiques peut être effectuée sur une période de temps déterminée, de préférence en continu, supérieure à 24h.

La collecte des données de fonctionnement et/ou météorologiques peut être effectuée sur une période de temps, de préférence en continu, inférieure à une semaine, voire inférieure à 72h, voire inférieure à 48h.

La collecte des données de fonctionnement et/ou météorologiques peut être effectuée sur une période de temps, éventuellement discontinue, comportant au moins un lever et/ou un coucher de soleil.

La collecte des données de fonctionnement et/ou météorologiques peut être effectuée sur une période de temps, éventuellement discontinue, durant laquelle il ne pleut pas.

De préférence, à l'issue de la collecte, un ensemble d'équations de normalisation est appliqué aux données de fonctionnement et/ou météorologiques, de préférence aux données de fonctionnement et météorologiques.

La normalisation est une étape classiquement effectuée dans le domaine de traitement de données permettant d'obtenir des données respectant un format particulier sans perte d'information.

Par exemple, pour un ensemble de mesures dans l'ensemble des nombres réels, une normalisation peut consister à appliquer un ensemble d'équations de sorte que les mesures appartiennent *in fine* à l'intervalle [0 ; 1].

Les équations de normalisation peuvent dépendre de valeurs seuils minimales et maximales des données, ces valeurs seuils peuvent être fonction des plages de fonctionnement des capteurs. Par exemple pour un capteur de densité de puissance fonctionnant sur une plage de valeurs [0 ; 1500 W/m²], les valeurs seuils minimale et maximale considérées pour les équations de normalisations peuvent être définies comme étant respectivement 0 W/m² et 1350 W/m². Une telle méthode de normalisation permet d'obtenir une bonne distribution des données normalisées dans l'intervalle [0 ; 1].

Cela permet non seulement d'améliorer la visualisation des données relatives à l'installation photovoltaïque, mais également d'améliorer la précision des algorithmes de détection des défauts.

### Détermination du modèle prédictif ajusté

La détermination 102 d'un modèle prédictif ajusté comporte la détermination d'un modèle prédictif de production ajusté 320 de l'installation photovoltaïque, à partir des informations structurelles 300 et des données météorologiques 220.

L'objectif de cette étape est de permettre l'analyse de n'importe quel type d'installation photovoltaïque, indépendamment du nombre de chaînes de panneaux qu'elle comporte, de la technologie utilisée, de son orientation, de son âge, etc, et indépendamment de l'environnement dans lequel elle se trouve, par une modélisation apte à prédire la production de l'installation photovoltaïque dont on souhaite détecter les défauts.

Pour cela, une méthode consiste à déterminer une production d'une installation théorique du même type que l'installation photovoltaïque dont on souhaite détecter les défauts, c'est-à-dire dont les informations structurelles sont similaires, de préférence identiques, l'installation théorique correspondant à une installation dont toutes les chaînes de panneaux photovoltaïques sont saines et fonctionnent donc à leur capacité maximale.

La production peut être exprimée par une puissance.

Le modèle prédictif ajusté peut prendre la forme d'une courbe de puissance, comme illustré sur la fig. 9b de la figure 9.

La détermination du modèle prédictif ajusté 320 peut être effectuée via l'exploitation de modèles basés sur la connaissance, par exemple au moyen de modèles génératifs tels que décrits dans Theis, and al. "A note on the évaluation of generative models." arXiv preprint arXiv:1511.01844 (2015), au moyen de modèles d'apprentissage par adaptation de domaine en considérant le domaine invariant tels que décrits dans Baktashmotlagh, M et al. « Unsupervised Domain Adaptation by Domain Invariant Projection » 2013 IEEE International Conférence on Computer Vision, pages 769-776, 2013, ou de préférence au moyen d'équations simulant le comportement d'une installation photovoltaïque telles que décrites dans Herteleer, B., et al. « Normalised efficiency of photovoltaic systems: Going beyond the performance ratio. » Solar Energy, vol. 157, pages 408-418, 2017.

L'approche au moyen d'équations prédéterminées simulant le fonctionnement d'une installation photovoltaïque permet notamment une grande précision de prédiction du comportement d'une installation photovoltaïque et est également facilement adaptable aux données réelles mesurées sur n'importe quel type d'installation photovoltaïque.

Dans un mode de réalisation de l'invention, un modèle prédictif de référence est déterminé à partir des informations structurelles de l'installation photovoltaïque, représentant le fonctionnement idéal d'une installation photovoltaïque comportant des panneaux sains et présentant les mêmes caractéristiques intrinsèques que celles collectées dans les informations structurelles relatives à l'installation photovoltaïque, puis à partir du modèle prédictif de référence, un modèle prédictif ajusté est déterminé à partir des données météorologiques, déterminant un profil de production idéal de l'installation photovoltaïque sous des conditions météorologiques telles que collectées.

De préférence, le modèle prédictif ajusté permet de modéliser le fonctionnement idéal de chacune des chaînes de l'installation photovoltaïque. Par fonctionnement idéal, on entend un fonctionnement sans défaut de l'installation.

En l'absence de défaut, le modèle prédictif ajusté correspond donc sensiblement à la production réelle.

La figure 9 illustre une comparaison entre des modèles prédictifs ajustés (fig 9b) et des données de fonctionnement de chaînes de panneaux photovoltaïques sans défaut (fig 9a), les modèles prédictifs ajustés modélisant l'intensité de courant des chaînes de panneaux photovoltaïques au cours du temps, et les données de fonctionnement étant des données acquises lors du fonctionnement réel des chaînes de panneaux photovoltaïques. La fig. 9c est une superposition des modèles prédictifs ajustés et des données de fonctionnement. Dans l'exemple de la figure 9, les chaînes de panneaux ne présentant aucun défaut, les courbes d'intensité de courant représentant les modèles prédictifs et les données de fonctionnement réelles sont sensiblement identiques.

La détermination du modèle prédictif ajusté est mise en oeuvre par des moyens informatiques 32, les moyens informatiques exploitant de préférence des méthodes basées sur des modèles basés sur la connaissance.

Les moyens informatiques comportent au moins un programme d'ordinateur comportant des lignes de code qui lorsqu'elles sont mises en oeuvre par un ordinateur permettent la détermination du modèle prédictif ajusté.

### Identification de défauts

L'identification des défauts comporte la détermination de la présence de défauts sur la ou les chaînes de l'installation photovoltaïque en soumettant le modèle prédictif de production ajusté, les données météorologiques et les données de fonctionnement à au moins un algorithme d'apprentissage automatique pré-entraîné de sorte à identifier une ou des chaînes de panneaux comprenant des défauts, appelée(s) « chaîne(s) défectueuse(s) ».

Par soumission du modèle prédictif de production ajusté, des données météorologiques et des données de fonctionnement, il faut comprendre soumission des données brutes, prétraitées et/ou d'attributs extraits et/ou sélectionnés à partir des données brutes ou prétraitées.

De préférence, l'identification des défauts comporte en outre la détermination des types de défauts détectés.

L'identification de la présence de défauts, et éventuellement l'identification des types de défaut, peut être effectuée au moyen de plusieurs algorithmes d'apprentissage automatique (ou « *machine learning* » en anglais). De préférence, au moins un premier algorithme d'apprentissage automatique identifie la présence de défauts puis au moins un deuxième algorithme d'apprentissage automatique identifie le type de défaut.

Si le défaut ne peut être identifié, une étape d'identification manuelle, effectuée de préférence par un technicien qualifié, peut être effectuée. De préférence, après une telle étape d'identification manuelle, l'algorithme d'apprentissage automatique est enrichi de sorte à permettre d'intégrer la détection future d'un tel défaut.

De préférence, le au moins un deuxième algorithme d'apprentissage automatique est un algorithme d'apprentissage automatique supervisé.

Un type de défauts peut être des traces d'escargot, du verre cassé, une délamination, une corrosion, un jaunissement, des microfissures des cellules solaires, des fissures des cellules solaires, une dégradation induite par le potentiel, une boîte de dérivation défectueuse, des fissures d'une feuille de fond (« backsheet »).

De façon générale, un algorithme d'apprentissage automatique est entraîné à partir d'une base de données d'entraînement DB de sorte à apprendre à pouvoir identifier, à partir de données d'entrée, des données de sortie.

Pour l'entraînement d'un algorithme d'apprentissage automatique supervisé, la base de données d'entraînement DB comporte un ensemble de données d'entrée et un ensemble de données de sortie. Pour l'entraînement d'un algorithme d'apprentissage automatique non-supervisé, la base de données d'entraînement DB comporte au moins un ensemble de données d'entrée.

L'entraînement d'un algorithme d'apprentissage automatique consiste à fournir au moins une partie de l'ensemble des données d'entrée et éventuellement au moins une partie de l'ensemble de sortie des données de la base de données d'entraînement DB, de sorte que l'algorithme apprenne à déterminer, à partir d'une donnée d'entrée, une donnée de sortie.

Dans le cas présent, une donnée d'entrée comprend un modèle prédictif de production ajusté, des données météorologiques et des données de fonctionnement, ou des attributs extraits desdites données de fonctionnement et météorologiques, brutes ou prétraitées, et une donnée de sortie correspond à la détection de la présence de défauts sur une chaîne et éventuellement la détermination du type de défaut détecté sur la chaîne.

De préférence, les données d'entrée sont prétraitées. Classiquement, les données de fonctionnement et/ou météorologiques sont au moins normalisées.

Les données d'entrée peuvent être décomposées, par exemple en fenêtres temporelles et/ou des attributs peuvent être extraits et/ou sélectionnés à partir des données de fonctionnement et/ou des données météorologiques.

En particulier, des attributs peuvent être extraits des données de fonctionnement et/ou météorologiques, par exemple par application d'un algorithme d'extraction d'attributs, notamment via une décomposition des données de fonctionnement multi-résolution suivie d'une extraction d'attributs statistiques.

Notamment, une décomposition multi-résolution permet une analyse temporelle et fréquentielle des données de fonctionnement.

Les attributs peuvent être en particulier choisis parmi :
- une asymétrie des données par rapport à la moyenne desdites données ;
- un aplatissement mesurant le pic d'une distribution de probabilité des données ;
- une variance des données ;
- une distance crête à crête, correspondant à la distance entre le pic d'amplitude la plus élevée et la vallée d'amplitude la plus faible ; et
- une énergie calculée à partir des données.

Cette liste est à titre indicative et n'est pas limitative.

De préférence, lorsque les données sont décomposées en fenêtres temporelles, au moins un algorithme d'apprentissage automatique est construit pour chacune des fenêtres temporelles.

Une telle décomposition permet notamment d'analyser le comportement des panneaux photovoltaïques sous différentes conditions d'irradiation de la journée, en particulier : matin, midi, après-midi et nuit.

Une extraction d'attributs peut être effectuée dans chacune de ces fenêtres.

L'apprentissage automatique peut être effectué à l'aide d'un algorithme utilisant les algorithmes des k plus proches voisins (« *k Nearest-Neighbors* » en anglais, aussi appelés « kNN) »), les machines à vecteurs de support (« *Support Vector Machines* » en anglais, aussi appelés « SVM ») et/ou les arbres de décisions (« *Decision Trees* » en anglais, ou « DT »).

Une combinaison de ces algorithmes avec un vote majoritaire relatif peut être effectuée.

### « k-Nearest-Neighbors »

Le kNN est l'un des modèles les plus largement utilisés pour la classification en raison de sa simplicité. Pour un échantillon donné en entrée *x*' = [*x₁'*, ..., *x_{nF}*'] avec des attributs pour classer, le kNN trouve ses voisins les plus proches parmi les échantillons déjà classés sur la base d'une métrique de distance, généralement la distance euclidienne.

Un kNN attribue l'échantillon en entrée à la classe la plus courante parmi ses k plus proches voisins.

À mesure que la valeur de k augmente, le modèle kNN peut tolérer plus de bruit car l'impact de la variance causée par l'erreur aléatoire est réduit, mais il existe un risque de manquer un modèle petit mais important dans les données. La clé pour choisir une valeur appropriée de k est de trouver un équilibre entre le surajustement et le sous-ajustement.

### « Support Vector Machines »

Les SVM sont des algorithmes de classification parmi les plus puissants et les plus complexes. Le classificateur SVM recherche un ou un ensemble d'hyperplans de séparation optimaux, maximisant la marge entre des classes constituant les sorties. Le SVM se fonde sur l'idée qu'il est possible de cartographier un espace d'entrée dans un espace d'attributs de dimension supérieure via une fonction noyau, puis d'appliquer un SVM linéaire sur cet espace, permettant ainsi de distinguer des classes n'étaient pas linéairement séparables.

### « Decision Trees »

Le modèle DT est caractérisé par des noeuds de décision comportant plusieurs branches, et des noeuds feuilles correspondant aux sorties des noeuds de décision. Les DT sont créés à partir d'un fractionnement récursif de l'ensemble d'échantillons fondé sur un ensemble de règles de fractionnement liées aux attributs.

Il existe de nombreuses variantes de DT dans la littérature, comme Itérative Dichotomies 3 (ID3), ID3 Successor (C4.5), Chi-Square Automatic Interaction Detector (CHAID), Classification and Regression Tree (CART). Cette liste n'est pas limitative.

### Vote majoritaire

Dans un mode de réalisation particulier, l'algorithme d'apprentissage automatique pré-entraîné de sorte à identifier une ou des chaînes de panneaux comprenant des défauts comporte la mise en oeuvre de plusieurs classificateurs, par exemple des trois classificateurs kNN, SVM et DT, combinés en utilisant le principe du vote majoritaire.

Chacun des classificateurs peut être en effet considéré comme un électeur, les résultats de prédiction, c'est-à-dire les sorties, de chaque classificateur étant comparés pour déterminer une prédiction finale.

Le principe du vote majoritaire peut être un vote majoritaire pondéré, un vote majoritaire relatif ou un vote majoritaire absolu.

Une fois entraîné, l'algorithme peut être exploité pour prédire une sortie, ici une détection de la présence, et éventuellement du type, de défauts présents sur une ou plusieurs chaîne(s) de panneaux photovoltaïques d'une installation photovoltaïque, à partir de données de fonctionnement, de données météorologiques, et/ou d'attributs extraits de ces données, éventuellement pour une fenêtre temporelle, et du modèle prédictif ajusté.

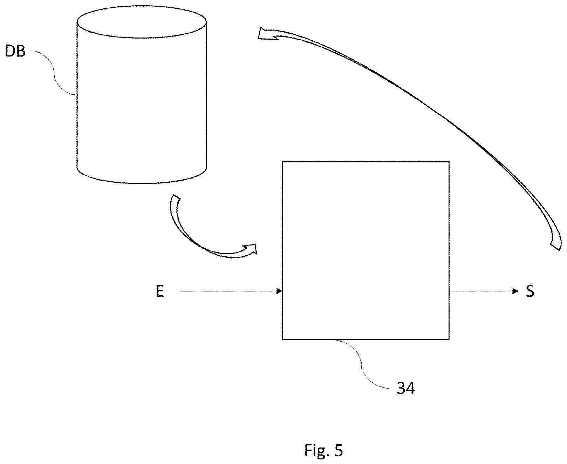

Pour chaque exploitation ultérieure à l'entraînement de l'algorithme d'apprentissage automatique, les données d'entrée E et les données de sortie S peuvent être enregistrées dans la base de données DB, comme schématisé sur la figure 5.

L'algorithme d'apprentissage automatique peut être actualisé, grâce à l'enrichissement de la base de données DB.

De préférence, des données de sortie S sont vérifiées par un opérateur avant d'être ajoutées dans la base de données DB.

### Génération d'un rapport

La méthode comporte de préférence l'étape optionnelle de présentation d'un rapport 360 indiquant la ou les chaînes défectueuses, et de préférence les types de défauts.

Dans un mode de réalisation préféré de l'invention, la méthode comporte la détermination d'une ou plusieurs actions de maintenance, les actions de maintenance étant déterminées à partir de l'identification de la présence de défauts sur la ou les chaînes défectueuses, et éventuellement du modèle prédictif de production ajusté et des données de fonctionnement relatives à chaque chaîne défectueuse, de préférence au moyen d'une analyse statistique, de préférence au moyen d'une méthode basée sur des résidus.

Par exemple, la détermination des actions de maintenance peut comprendre :
- la détermination d'une valeur seuil de puissance, le calcul d'un centroïde de la puissance des chaînes de panneaux saines ou d'un centroïde d'une puissance théorique pour une chaîne de panneaux déterminée par exemple à partir du modèle prédictif ajusté, les chaînes de panneaux saines étant les chaînes pour lesquelles aucun défaut n'a été identifié ;
- pour chaque chaîne de panneaux défectueuse, la comparaison de la puissance de la chaîne de panneaux défectueuse avec la valeur seuil de puissance afin de déterminer une amplitude de la différence entre la puissance de la chaîne défectueuse et la valeur seuil de puissance; la priorité de maintenance des chaînes de panneaux défectueuses étant déterminée par l'amplitude de la différence (plus l'amplitude est grande, plus la priorité de maintenance sera importante).

La valeur seuil peut être un centroïde de la puissance des chaînes de panneaux saines, les chaînes de panneaux saines étant les chaînes de panneaux pour lesquelles aucun défaut n'a été identifié.

La valeur seuil peut être un centroïde des puissances théoriques calculées pour chacune des chaînes de panneaux de l'installation, les puissances théoriques pouvant être déterminées à partir du modèle prédictif ajusté.

Dans un mode de réalisation, la valeur seuil est un centroïde des puissances théoriques et des puissances des chaînes de panneaux saines.

### Dispositifs

### Programme d'ordinateur

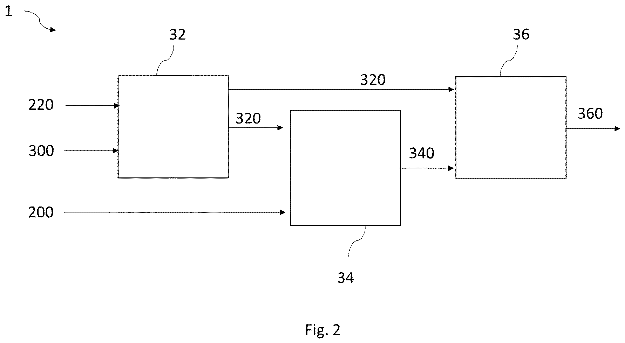

La figure 2 schématise un programme d'ordinateur 1 comportant des instructions, qui lorsque le programme est exécuté par un ordinateur, conduisent celui-ci à mettre en oeuvre une méthode de détection de défauts selon l'invention.

Le programme comprend un module de prédiction 32 qui permet de déterminer le modèle prédictif de production ajusté 320, à partir des données météorologiques collectées 220 et des informations structurelles collectées 300.

Le programme comprend un module de détection 34 qui permet l'identification de la présence de défauts sur la ou les chaînes de l'installation photovoltaïque et de préférence les types de défaut 340, à partir du modèle prédictif de production ajusté 320, des données météorologiques 220 et des données de fonctionnement 200 et/ou d'attributs extraits desdites données 220;200. Le module de détection comporte au moins un algorithme d'apprentissage automatique pré-entraîné de sorte à identifier une ou des chaînes de panneaux comprenant des défauts, appelée « chaîne défectueuse », et de préférence les types de défaut détectés. Le programme 1 peut comprendre un module de génération d'un rapport 36 déterminant des actions de maintenance, à partir de l'identification de la présence et éventuellement des types de défauts 340, et éventuellement du modèle prédictif de production ajusté 320, et/ou des données de fonctionnement 200.

Le module de génération 36 permet de préférence la présentation du rapport 360 à un opérateur, par exemple, par envoi du rapport 360 vers une interface graphique 38, tel qu'un écran d'ordinateur, un téléphone portable, une tablette ou tout autre moyen d'affichage bien connu.

### Installation photovoltaïque

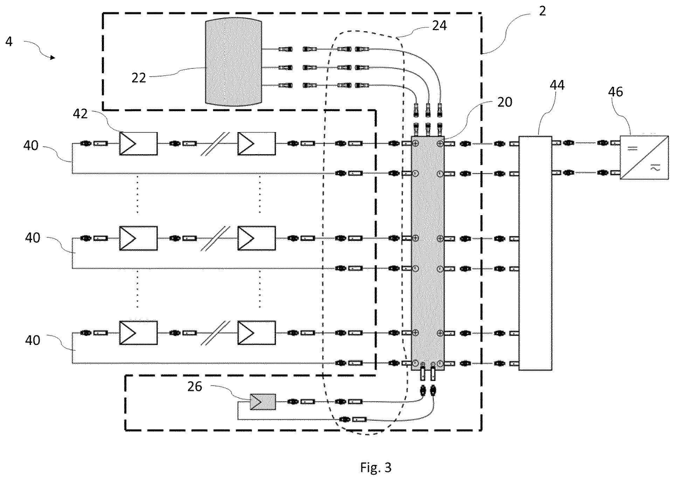

La figure 3 illustre une installation photovoltaïque 4 comportant des chaînes 40 de panneaux photovoltaïques formées chacune d'un ou plusieurs panneaux 42 photovoltaïques. Les chaînes 40 de panneaux photovoltaïques étant connectées à une boîte de jonction 44.

L'installation photovoltaïque comporte classiquement un onduleur 46.

Sur la figure 3, un dispositif de mesure 2 pour la collecte de données météorologiques et de fonctionnement est positionné sur l'installation photovoltaïque 4.

L'invention porte également sur une installation photovoltaïque 4 comportant un tel dispositif de mesure 2 selon l'invention.

### Dispositif de mesure

Un dispositif de mesure 2 selon l'invention comporte au moins :
- une station météorologique 22 pour l'acquisition de données météorologiques 220 , et
- un module de mesure de données de fonctionnement 20, notamment de tension et de courant, le module de mesure étant configuré pour acquérir les données à une fréquence supérieure ou égale à 1 Hz, de préférence supérieure ou égale à 1 kHz, et pour être connecté en série entre au moins une partie des chaînes 40 de panneaux de l'installation photovoltaïque, de préférence toutes les chaînes de panneaux, et la boîte de jonction 44 de sorte à acquérir les données de fonctionnement 200 pour chaque chaîne de panneaux connectée au dispositif de mesure.

Dans un mode de réalisation préféré de l'invention, le module de mesure 20 comporte un ou plusieurs capteur(s) analogique(s), en particulier pour mesure la tension et l'intensité pour chaque chaîne de panneaux de l'installation photovoltaïque.

Le dispositif de mesure comporte avantageusement des moyens de connexion 24, de préférence désactivables, du module de mesure 20 avec les chaînes 40 de panneaux photovoltaïques.

Les moyens de connexion 24 peuvent comporter des moyens de connexion du module de mesure 20 à la station météorologique 22, les moyens de connexion pouvant comporter des moyens de communication sans fil et/ou filaire.

Les moyens de connexion 24 peuvent comporter des moyens de connexion du module de mesure 20 et/ou de la station météorologique 22, avec une batterie 26.

De préférence, le module de mesure 20 et la station météorologique 22 sont configurés de sorte à être alimentés électriquement indépendamment l'un de l'autre.

La batterie confère avantageusement une autonomie au dispositif de mesure 2.

### Dispositif de détection de défauts

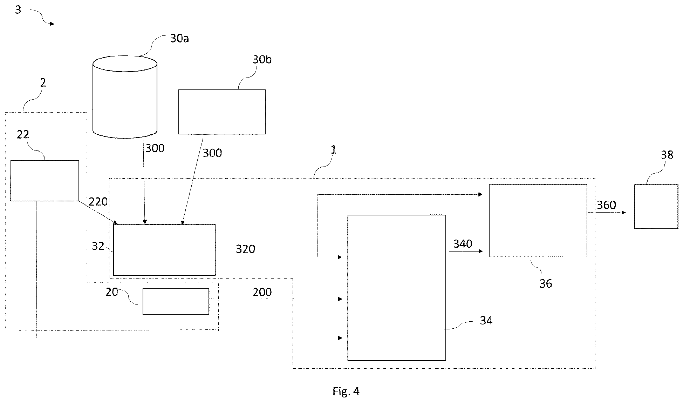

La figure 4 est un schéma bloc d'un dispositif de détection de défauts 3 selon l'invention.

Un dispositif de détection de défauts 3 comporte :
- un dispositif de mesure 2 selon l'invention ;
- un programme d'ordinateur 1 pour la mise en oeuvre d'une méthode de détection 10 de défauts selon l'invention.

Un dispositif de détection de défauts peut comporter une ou plusieurs caractéristiques d'un programme d'ordinateur 1 pour la mise en oeuvre d'une méthode de détection tel que décrit précédemment.

### Exemple

La figure 6 illustre un exemple de classification pour déterminer la présence du défaut du type « traces d'escargots » sur un panneau photovoltaïque d'une chaîne de panneaux photovoltaïques.

Les données de fonctionnement 200 sont présentées sous forme d'une courbe temporelle. La courbe illustre l'intensité de courant, en ampère, d'un panneau pendant une journée. Les données de fonctionnement 200 sont divisées en 4 fenêtres temporelles 200a , 200b, 200c et 200d.

Pour chaque fenêtre temporelle, trois classifieurs sont appliqués aux données de fonctionnement issues de chaînes de panneaux ayant été préalablement détectées comme défectueuses.

La soumission des données de fonctionnement aux trois classifieurs permet de déterminer les types de défauts.

En l'occurrence, un kNN, un SVM et un DT sont mis en oeuvre pour déterminer la présence d'un défaut du type « traces d'escargot » ou l'absence de défaut. Dans l'exemple, si le classifieur identifie la présence d'un défaut, il a pour sortie « traces d'escargot » tandis qu'en l'absence d'un défaut, il a pour sortie « sain ».

Un vote majoritaire est ensuite mis en oeuvre, à partir des sorties des classifieurs, pour chacune des fenêtres temporelles. On obtient alors une prédiction de présence de défaut pour chacune des fenêtres temporelles.

Par la suite, un vote majoritaire absolu est appliqué à partie des prédictions obtenues pour chaque fenêtre temporelle, déterminant si la chaîne de panneaux pour laquelle les données de fonctionnement ont été acquises est défectueuse ou non. Dans l'exemple, au moins un panneau de la chaîne de panneaux comporte un défaut du type traces d'escargot.

Comme il apparait clairement, l'invention permet une détection plus fine rapide et précise que les méthodes conventionnelles.

Par ailleurs, l'invention ne nécessite pas d'arrêt de production, les données pouvant être acquises lors du fonctionnement de l'installation photovoltaïque.

En outre, il n'est pas nécessaire d'avoir l'historique complet de l'installation photovoltaïque pour mettre en oeuvre la méthode de détection de défaut selon l'invention, contrairement à de nombreuses méthodes bien connues, qui exploitent l'historique des panneaux afin de modéliser précisément leur vieillissement. Contrairement à ces méthodes qui ne peuvent être appliquées qu'en connaissant très précisément l'installation photovoltaïque, la méthode proposée permet de diagnostiquer des défauts sur n'importe quel type d'installation, sans nécessité d'un historique exhaustif.

Bien évidemment, l'invention n'est pas limitée aux modes de réalisation décrits.

En particulier, une fois qu'un défaut a été détecté au niveau d'une chaîne de panneaux, l'homme du métier n'aurait aucun mal à adapter la méthode telle que décrite pour l'appliquer non plus à l'installation photovoltaïque pour détecter un défaut au niveau d'une chaîne de panneaux mais à la chaîne de panneaux pour détecter sur quel panneau un défaut est présent.

D'autres types d'algorithmes d'apprentissage automatiques pourraient également être mis en oeuvre, en combinaison ou seuls.

## Revendications

1. Méthode de détection de défauts (10) dans une installation photovoltaïque comportant plusieurs chaînes de panneaux photovoltaïques, la méthode comportant les étapes suivantes :
- collecte :
- d'informations structurelles (300) relatives à la structure de l'installation photovoltaïque,
- de données météorologiques (220); et
- de données de fonctionnement (200) pour chaque chaîne de panneaux photovoltaïques de l'installation photovoltaïque ;
- à partir des informations structurelles et des données météorologiques, détermination d'un modèle prédictif de production ajusté de l'installation photovoltaïque, ledit modèle prédictif de production ajusté modélisant une production électrique théorique optimale de l'installation photovoltaïque au regard des données météorologiques, le modèle prédictif de production ajusté étant déterminé en supposant que l'installation photovoltaïque ne présente pas de défaut ;
- identification de la présence de défauts sur chacune des chaînes de l'installation photovoltaïque en soumettant le modèle prédictif de production ajusté, les données météorologiques et les données de fonctionnement à au moins un algorithme d'apprentissage automatique pré-entraîné de sorte à identifier chaque chaîne de panneaux comprenant des défauts, appelée « chaîne défectueuse », et de préférence les types de défauts ;
- optionnellement, présentation d'un rapport indiquant la ou les chaînes défectueuses, de préférence les types de défauts, et de préférence une ou plusieurs actions de maintenance, les actions de maintenance étant déterminées à partir de l'identification de la présence de défauts sur la ou les chaînes défectueuses, et éventuellement du modèle prédictif de production ajusté et des données de fonctionnement relatives à chaque chaîne défectueuse, de préférence au moyen d'une analyse statistique, de préférence au moyen d'une méthode basée sur des résidus.

2. Méthode de détection selon la revendication 1, dans laquelle les données météorologiques comportent au moins une irradiation, et une température ambiante.

3. Méthode de détection selon l'une quelconque des revendications précédentes, dans laquelle les données météorologiques et/ou les données de fonctionnement, de préférence les données météorologiques et les données de fonctionnement sont acquises à une fréquence supérieure ou égale à 1 Hz, de préférence supérieure ou égale à 1 kHz.

4. Méthode de détection selon l'une quelconque des revendications précédentes, dans laquelle les informations structurelles comprennent : une marque et/ou un âge de l'installation photovoltaïque et/ou un matériau des panneaux photovoltaïques et/ou une technologie des panneaux photovoltaïques et/ou une inclinaison des panneaux photovoltaïques et/ou une topologie de l'installation photovoltaïque et/ou des informations relatives à un remplacement de panneaux photovoltaïques et/ou un nombre de panneaux par chaîne de panneaux et/ou un nombre de chaînes dans l'installation photovoltaïque.

5. Méthode de détection selon l'une quelconque des revendications précédentes, dans laquelle la collecte des données de fonctionnement est effectuée au moyen d'au moins un capteur analogique.

6. Méthode de détection selon l'une quelconque des revendications précédentes, dans laquelle la collecte des informations structurelles est effectuée au moyen d'une interface graphique et/ou au moyen d'une base de données.

7. Méthode de détection selon l'une quelconque des revendications précédentes, dans laquelle les données de fonctionnement sont divisées en fenêtres temporelles, l'identification de la présence de défauts étant effectuée pour chacune des fenêtres temporelles, au moins un algorithme d'apprentissage automatique étant pré-entraîné pour chacune desdites fenêtres temporelles.

8. Méthode de détection selon la revendication précédente, dans laquelle les données de fonctionnement sont divisées en fenêtres temporelles.

9. Programme d'ordinateur (1) comportant des instructions, qui lorsque le programme est exécuté par un ordinateur, conduisent celui-ci à mettre en oeuvre une méthode de détection de défauts selon l'une quelconque des revendications précédentes.

10. Dispositif de mesure (2) pour la collecte de données météorologiques (220) et de fonctionnement (200) dans une installation photovoltaïque composée d'une ou plusieurs chaînes de panneaux photovoltaïques reliée(s) à une boîte de jonction, le dispositif comportant :
- une station météorologique (22) pour l'acquisition de données météorologiques, et
- un module de mesure (20) de données de fonctionnement, notamment de tension et de courant, le module de mesure étant configuré pour acquérir les données à une fréquence supérieure ou égale à 1 Hz, de préférence supérieure ou égale à 1 kHz, et pour être connecté en série entre au moins une partie des chaînes de panneaux de l'installation photovoltaïque, de préférence toutes les chaînes de panneaux, et la boîte de jonction de sorte à acquérir les données de fonctionnement pour chaque chaîne de panneaux connectée au dispositif de mesure.

11. Dispositif de mesure selon la revendication 10, dans lequel le module de mesure comporte au moins un capteur analogique.

12. Dispositif de détection (3) de défauts dans une installation photovoltaïque comportant plusieurs chaînes de panneaux photovoltaïques reliées à une boîte de jonction (44), le dispositif comportant :
- un dispositif de mesure (2) pour la collecte de données météorologiques et de fonctionnement selon l'une quelconque des revendications 10 et 11, et
- un programme d'ordinateur (1) selon la revendication 9.

13. Dispositif de détection selon la revendication 12, comportant des moyens d'acquisitions d'informations structurelles de l'installation photovoltaïque, de préférence les moyens d'acquisition étant une interface graphique (30a ;30b).

14. Dispositif de détection selon la revendication 13, dans lequel l'installation comporte au moins au moins 8, mieux au moins 15, mieux au moins 20 chaînes de panneaux (40).

15. Installation photovoltaïque (4) comportant plusieurs chaînes de panneaux photovoltaïques (40) en parallèle connectées à une boîte de jonction (44), dans laquelle un dispositif de détection de défauts (3) selon la revendication 12 est branché en série entre les chaînes de panneaux et la boîte de jonction.
